# EUROPÄISCHE PATENTSCHRIFT

(11) **EP 0 865 397 B1**
(45) Veröffentlichungstag und Bekanntmachung des Hinweises auf die Patenterteilung: **12.12.2001**
(21) Anmeldenummer: 97944834.7
(22) Anmeldetag: 05.09.1997
(51) Int. Cl.: B65G 53/66, B65G 53/12

(54) **VERFAHREN ZUR STEUERUNG EINER ANLAGE ZUM EINSPEISEN VON SCHÜTTGUT IN EINE FÖRDERLEITUNG**
PROCESS FOR CONTROLLING AN INSTALLATION FOR FEEDING POURABLE GOODS TO A CONVEYOR LINE
PROCEDE DE REGULATION D'UNE INSTALLATION SERVANT A INTRODUIRE DES MATIERES EN VRAC DANS UNE CONDUITE DE TRANSPORT

(30) Priorität: 05.09.1996 DE 29615505 U
(43) Veröffentlichungstag der Anmeldung: 23.09.1998
(73) Patentinhaber: Möller-Fuller Bulk Handling GmbH, 22607 Hamburg (DE)
(72) Erfinder: GEWEKE, Martin, D-22869 Schenefeld (DE); LÜBBE, Thies, D-25337 Kölln-Reisiek (DE)
(74) Vertreter: Liebelt, Rolf, Dipl.-Ing.
(86) Internationale Anmeldenummer: EP9704830
(87) Internationale Veröffentlichungsnummer: WO9809897

(56) Entgegenhaltungen:
- DE-A- 1 802 417
- DE-A- 2 248 859
- DE-A- 2 925 510
- US-A- 5 494 381

## Beschreibung

Die Erfindung betrifft ein Verfahren zur Steuerung einer Anlage zum Einspeisen von staubförmigem oder feinkörnigem Schüttgut aus mindestens einem Fördergefäß in eine gemeinsame Förderleitung, bei dem das oder die Fördergröße zum Abziehen des Schüttgutes gleichzeitig mit Druck beaufschlagt und entleert werden sowie nach Druckentlastung wieder mit Schüttgut gefüllt werden.

Siehe als Beispiel die Dokumente DE-A- 1 802 417 und DE-A-2 248 859. Derartige pneumatische Förderanlagen sind in unterschiedlichen Ausführungsformen bekannt. Durch das chargenweise Füllen der Fördergefäße bei einem ungleichmäßigen Anfall an Schüttgut und Einleiten des Förderbeginns in Abhängigkeit vom Füllstand der Fördergefäße entstehen Totzeiten, durch welche die Förderleistung der Anlage herabgesetzt wird. Es ergeben sich somit Durchschnittsförderleistungen der Anlage, die erheblich unter der möglichen Förderkapazität des Systems liegen. Dabei sind insbesondere die den Förderbeginn auslösenden Füllstandsmelder der Fördergefäße störanfällige Bauteile.

Es sind auch pneumatische Förderanlagen für feinkörniges oder staubförmiges Schüttgut ohne Füllstandsmelder bekannt. In diesen Anlagen wird unabhängig vom jeweiligen Schüttgutanfall in einer vorgegebenen Zeitfolge die Förderung ausgelöst. Diese Betriebsweise ist unökonomisch, da die Anlage nicht in ihrem optimalen Betriebspunkt betrieben wird, was zu einem sehr hohen Energieverbrauch führt.

Aufgabe der Erfindung ist es nun, nicht nur die Störanfälligkeit von pneumatischen Förderanlagen zu beheben, sondern auch deren Energieverbrauch zu senken.

Erfindungsgemäß wird diese Aufgabe dadurch gelöst, daß die anlagenspezifische optimal geförderte Masse an Schüttgut bei maximal möglichem Füllgrad der Fördergefäße bestimmt, die beim Entleeren der Fördergefäße ausgetragene Masse an Schüttgut aus gemessenen relevanten Förderparametern, nämlich mindestens des Druckes während des Förderzyklus sowie der Förderzeit ermittelt und mit der optimal zu fördernden Masse verglichen sowie bei Abweichungen von der optimal zu fördernden Masse die Pause zwischen den Förderzyklen um vorgegebene Zeitintervalle verändert wird.

Bei dem erfindungsgemäßen Verfahren zur Steuerung einer Anlage zum Einspeisen von staubförmigem oder feinkörnigem Schüttgut aus druckbeaufschlagten Fördergefäßen in eine Förderleitung wird aus den fördertechnischen Daten die während des letzten oder vorhergehenden Förderzyklus transportierte Masse an Schüttgut ermittelt und mit der bei optimalen Bedingungen mit der Anlage zu fördernden Masse verglichen. Durch Verändern (Verkürzen oder Verlängern) der Pause um vorzugsweise vorgegebene oder berechnete Zeitintervalle zwischen aufeinander folgenden Förderzyklen wird nun mit der Erfindung auf einfache Weise sichergestellt, daß die Fördergefäße vor dem Einleiten eines Förderzyklus maximal gefüllt sind, wodurch nicht nur ein Betreiben der Anlage unter optimalen Bedingungen gewährleistet ist, sondern auch Störungen im Anlagenbetrieb durch mechanische, den Förderbeginn auslösende Elemente wie Füllstandsmelder vermieden werden.

Das erfindungsgemäße Verfahren wird im folgenden noch an einem Ausführungsbeispiel an Hand der Zeichnung erläutert, die
eine schematische Schnittansicht einer pneumatischen Förderanlage zeigt.

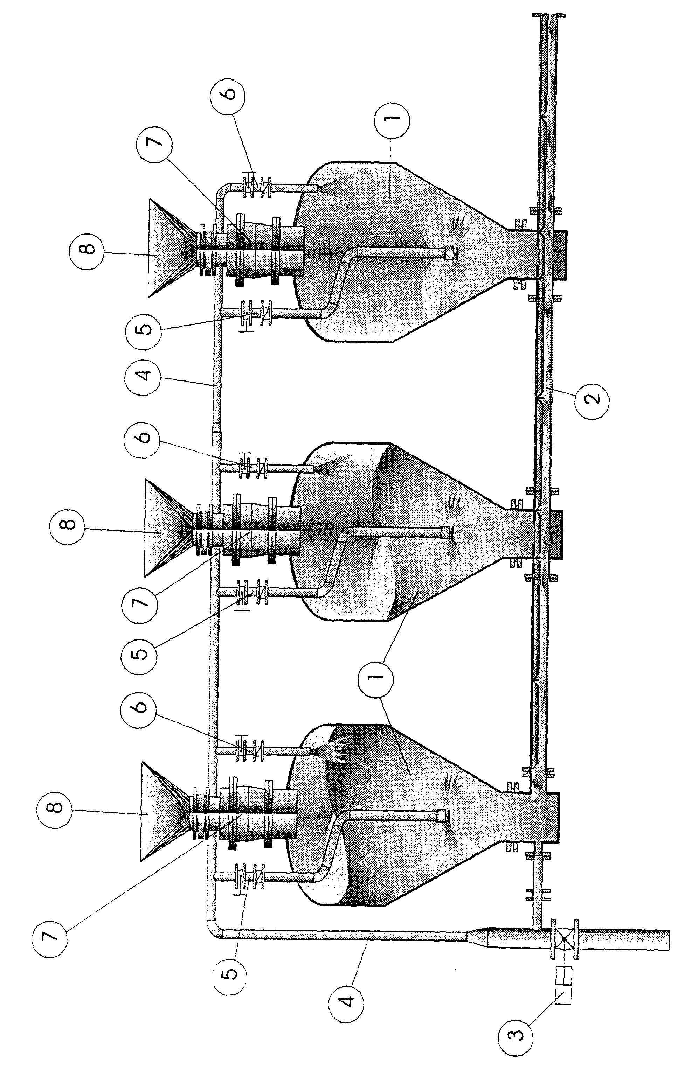

In Fig. 1 ist in vereinfachter Darstellungsweise ein Beispiel für eine Anlage zum Einspeisen von staubförmigen oder feinkörnigem Schüttgut aus drei Fördergefäßen 1 in eine gemeinsame pneumatische Förderleitung 2 gezeigt. Die Fördergefäße 1 münden unmittelbar in die Förderleitung 2, die über ein Ventil 3 mit einer Druckgasquelle (nicht gezeigt) in Verbindung steht. An die Druckgasquelle ist über das Ventil 3 noch eine Luftleitung 4 angeschlossen, von der Stichleitungen 5 und 6 zu den Fördergefäßen 1 abzweigen.

In jedes Fördergefäß 1 mündet weiter jeweils eine Schüttgut-Zuführleitung 7, die an den Auslaß 8 eines Schüttbehälters angeschlossen ist. In den Schüttgut-Zuführleitungen 7 ist ein Absperrorgan (nicht gezeigt) vorgesehen, das beim Füllen des Fördergefäßes 1 offen und während des Einspeisens des Schüttgutes in die Förderleitung 2 geschlossen ist.

Zum gleichzeitigen Einspeisen des in den Fördergefäßen 1 enthaltenen Schüttgutes in die Förderleitung 2 werden durch Öffnen des Ventiles 3 und gleichzeitiges Schließen des Absperrorganes in den Schüttgut-Zuführleitungen 7 sowohl die Luftleitung 4 einschließlich der Stichleitungen 5 und 6 als auch die Förderleitung 2 mit Fördermedium, z. B. Druckluft, versorgt. Das Schüttgut gelangt dabei gleichzeitig aus sämtlichen Fördergefäßen 1 zum Abtransport in die Förderleitung 2. Nach dem Entleeren der Fördergefäße 1 werden durch Umschalten des Ventiles 3 und der Absperrorgane in Schüttgut-Zuführleitungen 7 die Fördergefäße 1 erneut mit Schüttgut gefüllt, um anschließend in der beschriebenen Weise wieder entleert zu werden. Dabei wird die Länge der Pause zwischen den einzelnen Förderzyklen (Entleeren der Fördergefäße 1) erfindungsgemäß durch Vergleichen der während des letzten oder vorletzten Förderzyklus transportierten Masse an Schüttgut, die aus fördertechnischen Daten (Druck während des Förderzyklus; Förderzeit; Schüttgutdichte und -temperatur; Förderweg, Massenstrom, Temperatur, lokale Dichte sowie spezifischer Reibungsbeiwert des Fördermediums) bestimmt wurde, mit der bei optimalen Bedingungen mit der Anlage zu fördernden Masse ermittelt.

## Patentansprüche

1. Verfahren zur Steuerung einer Anlage zum Einspeisen von staubförmigem oder feinkörnigem Schüttgut aus mindestens einem Fördergefäß (1) in eine Förderleitung (2), bei dem das oder die Fördergefäße zum Abziehen des Schüttgutes gleichzeitig mit Druck (5,6), beaufschlagt und entleert sowie nach Druckentlastung wieder mit Schüttgut gefüllt werden, **gekennzeichnet durch** die Verfahrensschritte:
a) Bestimmen der anlagenspezifischen optimal geförderten Masse an Schüttgut bei maximal möglichem Füllgrad der Fördergefäße (1),
b) Bestimmen der beim Entleeren der Fördergefäße ausgetragenen Masse an Schüttgut aus den gemessenen relevanten Förderparametern, nämlich mindestens des Druckes während des Förderzyklus sowie der Förderzeit,
c) Vergleichen der ausgetragenen mit der optimal zu fördernden Masse an Schüttgut,
d) Verändern (Verlängern/Verkürzen) der Pause zwischen den Förderzyklen bei Abweichungen der während des letzten bzw. vorhergehenden Förderzyklus ausgetragenen Masse von der optimal zu fördernden Masse an Schüttgut.

2. Verfahren nach Anspruch 1, **dadurch gekennzeichnet, daß** die Pause um vorgegebene Zeitintervalle verändert wird.

3. Verfahren nach Anspruch 1, **dadurch gekennzeichnet, daß** die Pause um Zeitintervalle verändert wird, die aus dem Vergleich von ausgetragener zu optimal zu fördernder Masse an Schüttgut hergeleitet werden.

## Claims

1. Process for controlling an installation for feeding powdery or finely divided pourable goods from at least one conveying vessel (1) into a conveyor line (2), in which the conveying vessel or vessels are simultaneously subjected to pressure (5, 6) to remove the pourable goods and are emptied and refilled with pourable goods after relaxation of pressure, **characterised by** the process steps comprising:
a) Determination of the optimum mass of pourable goods conveyed by the specific installation with maximum possible filling of the conveying vessels (1)
b) Determination of the mass of pourable goods discharged when emptying the conveying vessels from the measured relevant conveying parameters, namely at least the pressure during the conveying cycle and the conveying time.
c) Comparison of the discharged mass of pourable goods with the optimum mass to be conveyed.
d) Variation (extension/reduction) of the pause between the conveying cycles in the case of deviations in the mass discharged during the previous or preceding conveying cycle from the optimum mass of pourable goods to be conveyed.

2. Process according to claim 1, **characterised in that** the pause is varied by predetermined time intervals.

3. Process according to claim 1, **characterised in that** the pause is varied by time intervals derived from the comparison of discharged mass of pourable goods and optimum mass of pourable goods to be conveyed.

## Revendications

1. Procédé pour commander une installation d'alimentation en produit en vrac pulvérulent ou à grains fins à partir d'au moins un silo (1) dans une conduite d'acheminement (2), dans lequel le ou les silos sont mis simultanément sous pression (5, 6) en vue d'enlever le produit en vrac et sont vidés, puis à nouveau remplis avec un produit en vrac après le vidage sous pression, **caractérisé par** les étapes de procédé consistant à :
a) déterminer la quantité de produit en vrac optimale acheminée pour une installation spécifique avec un taux de remplissage aussi élevé que possible des silos (1),
b) déterminer la quantité de produit en vrac enlevée lors du vidage des silos à partir de paramètres appropriés mesurés, c'est-à-dire au moins à partir de la pression pendant le cycle d'acheminement et du temps d'acheminement,
c) comparer la quantité de produit en vrac enlevée avec la quantité maximale de produit en vrac à acheminer,
d) modifier (prolonger ou réduire) le temps d'arrêt entre les cycles d'acheminement lorsque la quantité enlevée pendant le dernier ou précédent cycle d'acheminement est différente de la quantité de produit en vrac optimale à acheminer.

2. Procédé selon la revendication 1, **caractérisé en ce que** l'on modifie le temps d'arrêt avec des intervalles de temps prédéterminés.

3. Procédé selon la revendication 1, **caractérisé en ce que** l'on modifie le temps d'arrêt avec des intervalles de temps qui sont déterminés en comparant la quantité de produit en vrac enlevée avec la quantité de produit en vrac optimale à acheminer.
